(19) Europäisches Patentamt

European Patent Office

Office européen des brevets

(11) EP 1 501 273 A1

(12) EUROPEAN PATENT APPLICATION

(43) Date of publication:
26.01.2005 Bulletin 2005/04

(51) Int Cl.⁷: H04N 1/00

(21) Application number: 04254236.5

(22) Date of filing: 15.07.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 15.07.2003 JP 2003196870
14.07.2004 JP 2004207747

(71) Applicant: Ricoh Company, Ltd.
Tokyo 143-555 (JP)

(72) Inventors:
• Tone, Takehare
Tokyo (JP)
• Ohyama, Maki
Tokyo (JP)
• Kawamoto, Hiroyuki
Kawasaki-shi Kanagawa (JP)
• Ohkawa, Satoshi
Nishitokyo-shi Tokyo (JP)
• Nishita, Taira
Tokyo (JP)
• Arai, Hiroshi
Kawaguchi-shi Saitama (JP)
• Sugiyama, Naoki
Kawasaki-shi Kanagawa (JP)
• Miyamoto, Isao
Yamato-shi, Kanagawa (JP)

(74) Representative: Leeming, John Gerard
J.A. Kemp & Co.,
14 South Square,
Gray's Inn
London WC1R 5JJ (GB)

(54) **Image processing apparatus, program, computer-readable storage medium, and image processing method that can use stored image data for various purposes**

(57) An image processing apparatus includes an image reading apparatus reading an image of a manuscript and a printer engine performing image formation on a medium based on image data of the read image of the manuscript, and performs a copying function in accordance with various image kind modes. An image accumulation part accumulates, in a storage device, image data that are input in a first image kind mode. A data format conversion part converts the image data accumulated in the storage device by the image accumulation part to image data of a second image kind mode in accordance with a processing condition. An image data delivering part transmits, to an external instrument connected to the image processing apparatus via a network, the image data of the second image kind mode subjected to conversion by the data format conversion part.

FIG.1

**Description**

The present invention generally relates to image processing apparatuses, programs, computer-readable recording media, and image processing methods.

A function called network scanner is known that connects a digital copying machine or an image reading apparatus to a network, scans an original image by means of a scanner of the digital copying machine or the image reading apparatus, and delivers read image data to a terminal such as a computer connected to the network.

For example, Japanese Laid-Open Patent Application No. 2000-333026 proposes to provide an expansion box based on the architecture of a general-purpose computer system, accumulate in a hard disk device (scan box) in the expansion box images (image data) that are scanned by an image input part of an image forming apparatus, and share image files in the scan box among computers connected to a network.

Such a scan box function is used by following a processing procedure as described below. First, scan parameters such as resolution, tone (gradation), magnification, a surface to be read, image size, and a saving location are selected, and an original image is read. Then, read image data are transferred to an image processing part and image processing in accordance with the scan parameters is performed. However, since printing of the image data is not planned, it is unnecessary to generate a data format of a printing system, and color coordinate transformation from the RGB system to the CMYK system, tone correction, and a compression process of the image data are omitted. Then, the image data subjected to the image processing are transferred to the expansion box. In the expansion box, the received image data are temporarily saved in the scan box, which is assigned to a predetermined disk region in the hard disk device. When all original documents are accumulated, the image data are retrieved from the scan box by a client of a network.

However, with the technique disclosed in Japanese Laid-Open Patent Application No. 2000-333026, in a case where the client selects, by means of an operation part, scan parameters such as the image kind mode, resolution, tone, magnification, a surface to be read, image size, and saving location, an original (manuscript) is scanned, read image data are transferred to the image processing part and accumulated in the hard disk after being subjected to image processing in accordance with the scan parameters. Thus, it is difficult or impossible to perform image format conversion on the accumulated image data. Hence, in a case where plural people desire to receive the image data accumulated in the storage medium under different image format conditions, there is a disadvantage in that it is necessary to scan the image data again depending on the desired condition of each client.

A general object of the present invention is to provide an improved and useful image processing apparatus, program, computer-readable storage medium, and image processing method in which one or more of the above-mentioned problems are eliminated.

Another and more specific object of the present invention is to enable image data that are input in a predetermined image kind mode and accumulated in a storage device of an image processing apparatus to be used for various applications.

Still another object of the present invention is to enable the same image data to be received by plural people in different image kind modes.

In order to achieve the above-mentioned objects, according to one aspect of the present invention, there is provided an image processing apparatus that includes an image reading apparatus reading an image of a manuscript and a printer engine performing image formation on a medium based on image data of the read image of the manuscript, and performs a copying function in accordance with various image kind modes, said image processing apparatus comprising:

an image accumulation part accumulating, in a storage device, image data that are input in a first image kind mode;
a data format conversion part converting the image data accumulated in the storage device by the image accumulation part to image data of a second image kind mode in accordance with a processing condition; and
an image data delivering part transmitting, to an external instrument connected to the image processing apparatus via a network, the image data of the second image kind mode subjected to conversion by the data format conversion part.

Accordingly, the image data input in the first image kind mode and accumulated in the storage device are converted to the image data of the second image kind mode in accordance with the processing condition, and transmitted to the external instrument connected to the image processing apparatus via the network. Hence, it is possible for the external instrument to receive from the image processing apparatus the image data whose image kind mode is converted to a desired image kind mode. Thus, it is possible to use the image data accumulated in the storage device for various purposes. In addition, since conversion of image kind mode is performed on the image data that are already accumulated in the storage device, it is possible for plural people to receive the same image data in different image kind modes.

Here, the image kind mode represents a mode for performing optimum image processing in accordance with a manuscript image (document image or photograph image, for example). The image kind mode includes: a "character mode" that clearly reproduces characters written with a pencil or light characters (characters written with thin ink, for example); a "photograph mode" that finely reproduces photographs; and a "character and photograph mode" that reproduces a manuscript including a photograph and characters.

In an embodiment of the present invention, the image data accumulated in the storage device by the image accumulation part may be the image data generated based on the image read by the image reading apparatus and not subjected to image processing for copying.

Accordingly, the present invention may be applied to, for example, change of the image kind mode with respect to monochrome image data.

In an embodiment of the present invention, the image data accumulated in the storage device by the image accumulation part may be the image data used for the image formation by the printer engine and subjected to image processing for copying.

Accordingly, the present invention may be applied to, for example, change of the image kind mode with respect to color image data.

In an embodiment of the present invention, the processing condition may be specified by the external instrument.

Accordingly, irrespective of the image kind mode at the time of a copying operation, it is possible to perform conversion to a image kind mode in accordance with the processing condition requested by the external instrument, and it is possible to satisfy a requirement related to the image kind mode required by the external instrument.

In an embodiment of the present invention, the external instrument, which is a transmission destination of the image data of the second image kind mode subjected to the conversion by the data format conversion part in accordance with the processing condition, may be specified by an operation part provided to the image processing apparatus.

Accordingly, irrespective of the image kind mode at the time of a copying operation, it is possible to perform conversion to an image kind mode in accordance with the processing condition requested by means of the operation part provided to the image processing apparatus, and it is possible to specify by means of the operation part provided to the image processing apparatus an external instrument that is the transmission destination of the image data subjected to the conversion to the requested image kind mode. Hence, it is possible to satisfy a requirement related to the image kind mode required with respect to the external instrument.

In an embodiment of the present invention, the data format conversion part may include a filtering part adjusting the intensity of the image data and a $\gamma$ process part adjusting the concentration characteristics of the image data, and

the image data input in the first image kind mode may be converted to the image data of the second image kind mode by performing processes in the filtering part and the $\gamma$ process part by selecting coefficients in accordance with the processing condition.

Accordingly, it is possible to positively convert the image kind mode of image data from the first image kind mode to the second image kind mode.

In an embodiment of the present invention, the data format conversion part may include a resolution conversion part that converts the resolution of the image data accumulated in the storage device by the image accumulation part.

Accordingly, since it is possible to convert image data to image data having a desired resolution, it is possible to satisfy the data contents required by the external instrument.

In an embodiment of the present invention, the data format conversion part may include a halftone process part that converts the tone level of the image data accumulated in the storage device by the image accumulation part.

Accordingly, since it is possible to convert image data to image data having a desired tone level, it is possible to satisfy the data contents required by the external instrument.

In an embodiment of the present invention, the data format conversion part may include a compression part that converts the file format of the image data accumulated in the storage device by the image accumulation part.

Accordingly, since it is possible to convert image data to image data of a desired file format, it is possible to satisfy the data contents required by the external instrument.

Additionally, according to another aspect of the present invention, there is provided a computer-readable program controlling an image processing apparatus that includes an image reading apparatus reading an image of a manuscript and a printer engine performing image formation on a medium based on image data of the read image of the manuscript, and performs a copying function in accordance with various image kind modes, said program causing a computer to carry out:

an image accumulation function of accumulating, in a storage device, image data that are input in a first image kind mode;

a data format conversion function of converting the image data accumulated in the storage device by the image accumulation part to image data of a second image kind mode in accordance with a processing condition; and an image data delivering function of transmitting, to an external instrument connected to the image processing apparatus via a network, the image data of the second image kind mode subjected to conversion by the data format conversion part.

Accordingly, the image data input in the first image kind mode and accumulated in the storage device are converted to the image data of the second image kind mode in accordance with the processing condition, and transmitted to the external instrument connected to the image processing apparatus via the network. Hence, it is possible for the external instrument to receive from the image processing apparatus the image data whose image kind mode is converted to a desired image kind mode. Thus, it is possible to use the image data accumulated in the storage device for various purposes. In addition, since conversion of image kind mode is performed on the image data that are already accumulated in the storage device, it is possible for plural people to receive the same image data in different image kind modes.

In an embodiment of the present invention, the image data accumulated in the storage device by the image accumulation function may be the image data generated based on the image read by the image reading apparatus and not subjected to image processing for copying.

Accordingly, the present invention may be applied to, for example, change of the image kind mode with respect to monochrome image data.

In an embodiment of the present invention, the image data accumulated in the storage device by the image accumulation function may be the image data used for the image formation by the printer engine and subjected to image processing for copying.

Accordingly, the present invention may be applied to, for example, change of the image kind mode with respect to color image data.

In an embodiment of the present invention, the processing condition may be specified by the external instrument.

Accordingly, irrespective of the image kind mode at the time of a copying operation, it is possible to perform conversion to an image kind mode in accordance with the processing condition requested by the external instrument, and it is possible to satisfy a requirement related to the image kind mode required by the external instrument.

In an embodiment of the present invention, the external instrument, which is a transmission destination of the image data of the second image kind mode subjected to the conversion by the data format conversion part in accordance with the processing condition, may be specified by an operation part provided to the image processing apparatus.

Accordingly, irrespective of the image kind mode at the time of a copying operation, it is possible to perform conversion to an image kind mode in accordance with the processing condition requested by means of the operation part provided to the image processing apparatus, and it is possible to specify by means of the operation part provided to the image processing apparatus an external instrument that is the transmission destination of the image data subjected to the conversion to the image kind mode. Hence, it is possible to satisfy a requirement related to the image kind mode required with respect to the external instrument.

In an embodiment of the present invention, the data format conversion function may include a filtering function of adjusting the intensity of the image data and a γ process function of adjusting the concentration characteristics of the image data,

wherein the image data input in the first image kind mode may be converted to the image data of the second image kind mode by causing the computer to carry out the filtering function and the γ process function by selecting coefficients in accordance with the processing condition.

Accordingly, it is possible to positively convert the image kind mode of image data from the first image kind mode to the second image kind mode.

In an embodiment of the present invention, the data format conversion function may cause the computer to carry out a resolution conversion function that converts a resolution of the image data accumulated in the storage device by the image accumulation function.

Accordingly, since it is possible to convert image data to image data having a desired resolution, it is possible to satisfy the data contents required by the external instrument.

In an embodiment of the present invention, the data format conversion function may cause the computer to carry out a halftone process function that converts the tone level of the image data accumulated in the storage device by the image accumulation function.

Accordingly, since it is possible to convert image data to image data having a desired tone level, it is possible to satisfy the data contents required by the external instrument.

In an embodiment of the present invention, the data format conversion function may cause the computer to carry out a compression function that converts the file format of the image data accumulated in the storage device by the image accumulation function.

Accordingly, since it is possible to convert image data to image data of a desired file format, it is possible to satisfy the data contents required by the external instrument.

Additionally, according to another aspect of the present invention, there is provided a computer readable storage medium storing one of the programs as mentioned above.

Accordingly, by causing a computer to read and execute the program stored in the storage medium, it is possible to obtain effects similar to those obtained by the programs as mentioned above.

Additionally, according to another aspect of the present invention, there is provided an image processing method to be used in an image processing apparatus that includes an image reading apparatus reading an image of a manuscript and a printer engine performing image formation on a medium based on image data of the read image of the manuscript, and performs a copying function in accordance with various image kind modes, said image processing method comprising the steps of:

accumulating, in a storage device, image data that are input in a first image kind mode;
converting the image data accumulated in the storage device in the step of accumulating to image data of a second image kind mode in accordance with a processing condition; and
transmitting, to an external instrument connected to the image processing apparatus via a network, the image data of the second image kind mode subjected to conversion in the step of converting.

Accordingly, the image data input in the first image kind mode and accumulated in the storage device are converted to the image data of the second image kind mode in accordance with the processing condition, and transmitted to the external instrument connected to the image processing apparatus via the network. Hence, it is possible for the external instrument to receive from the image processing apparatus the image data whose image kind mode is converted to a desired image kind mode. Thus, it is possible to use the image data accumulated in the storage device for various purposes. In addition, since conversion of image kind mode is performed on the image data that are already accumulated in the storage device, it is possible for plural people to receive the same image data in different image kind modes.

Other objects, features and advantages of the present invention will become more apparent from the following detailed description of exemplary embodiments when read in conjunction with the following drawings, in which:

FIG. 1 is a block diagram schematically showing the system structure of a digital color copying machine according to a first embodiment of the present invention;
FIG. 2 is a block diagram showing a process flow at the time when a copying function is used with one-dot chain lines;
FIG. 3 is a block diagram showing the internal structure of a scanner correction part;
FIG. 4 is a block diagram showing the internal structure of a printer correction part;
FIG. 5 is a block diagram showing a flow of delivering data (data to be delivered) at the time of delivering image data with one-dot chain lines;
FIGS. 6A and 6B show display screen images displayed on an external PC for receiving (capturing) image data from the digital color copying machine;
FIG. 7 is a block diagram showing the structure of an image format conversion unit;
FIGS. 8A, 8B and 8C are schematic diagrams for explaining a resolution conversion function of a resolution conversion part;
FIGS. 9A, 9B and 9C are schematic diagrams for explaining a process by a filtering part;
FIGS. 10A and 10B are graphs for explaining a process by a γ process part;
FIGS. 11A and 11B are schematic diagrams for explaining the dither method applied in a halftone process part;
FIG. 12 is a schematic diagram for explaining the error diffusion method applied in the halftone process part;
FIG. 13 is a block diagram showing the internal structure of a scanner correction part of a digital color copying machine according to a second embodiment of the present invention;
FIG. 14 is a block diagram showing the internal structure of a printer correction part;
FIG. 15 is a block diagram showing the structure of an image format conversion unit; and
FIGS. 16A and 16B show display screen images for delivering image data from the digital color copying machine to the external PC.

## DETAILED DESCRIPTION OF THE PREFERRED EMBODIMENTS

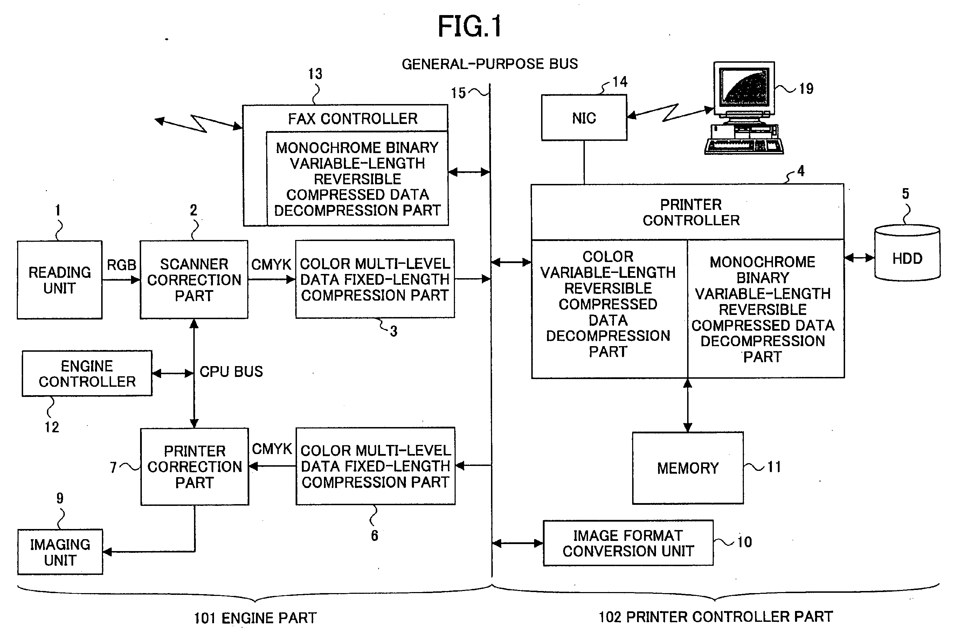

Referring to FIGS. 1 through 12, a description is given below of a first embodiment of the present invention. In this embodiment, a digital color copying machine, which is a multi-functional apparatus having a copying function, a facsimile (FAX) function, a printer function, and a function of delivering an input image (read original image and an image that is input by the printer or FAX function) is used as an image processing apparatus.

(1. Description of Digital Color Copying Machine 100)

FIG. 1 is a block diagram schematically showing the system structure of a digital color copying machine 100 according to this embodiment. The digital color copying machine 100 shown in FIG. 1 is broadly classified into an engine part 101 and a printer controller part 102. The engine part 101 is controlled by an engine controller 12, and the printer controller part 102 is controlled by a printer controller 4. The digital color copying machine 100 also includes a FAX controller 13 in the engine part 101, thereby controlling the FAX function of the digital color copying machine 100 and transmitting/receiving image data to/from a predetermined network such as a PSTN (Public Switched Telephone Network). The digital color copying machine 100 includes an image data delivering function in addition to the copying function, the FAX function, and the printer function, which functions are realized by operations of the engine part 101 and the printer controller part 102.

As for elements used for the copying function, the digital color copying machine 100 includes: a reading unit 1 that is an image reading apparatus reading an original (manuscript) as color image data; a scanner correction part 2 that performs image processing on image data read by the reading unit 1; a color multi-level data fixed-length compression part 3 that compresses color multi-level data output from the scanner correction part 2, and a HDD (Hard Disk Drive) 5 that is a storage device accumulating compressed data.

In addition, as for elements used for the FAX function, the digital color copying machine 100 includes: the FAX controller 13 that is connected to the PSTN and handles transmission and reception of a FAX signal; and a monochrome binary variable-length reversible compression data decompression part that is provided in the FAX controller 13 and decompresses the received compressed FAX data into original data.

Further, as for elements used for the printer function, the digital color copying machine 100 includes: a NIC (Network Interface Controller) 14 for communicating with an external PC (Personal Computer) 19, which is an external instrument connected to a network such as a LAN (Local Area Network); and the printer controller 4 that performs raster image processing (RIP) in accordance with a print command from the external PC 19 via the NIC 14, and performs compression dedicated to data subjected to the RIP.

Additionally, as for elements used for the image data delivering function, the digital color copying machine 100 includes an image format conversion unit 10 (which is further described below) that functions as data format conversion means for converting the data generated when using each of the above-mentioned functions and accumulated in the HDD 5 into a data format suitable for a terminal (in this embodiment the external PC 19), which is a transfer destination.

When printing out (performing an image formation process on) image data generated by each of the above-mentioned functions, the compressed data accumulated in the HDD 5 are used. Thus, in order to decompress the accumulated compressed data into the original data, a color multi-level data fixed-length decompression part 6 is provided for the copying function, and a monochrome binary variable-length reversible compression data decompression part and a color variable-length reversible compression data decompression part are provided in the printer controller 4 for the FAX and printer functions. The engine part 101 includes as means for performing an image forming process a printer correction part 7 that performs correction on decompressed data, and an imaging unit 9 that is a printer engine. The imaging unit 9 forms and outputs an image onto a medium such as a transfer paper. The imaging unit 9 may use various printing systems such as electrophotographic systems, inkjet printing systems, sublimation dye transfer printing systems, silver photography systems, direct thermal printing systems, and thermofusible transfer systems.

The printer controller 4 is structured by a microcomputer including a CPU (Central Processing Unit) that centrally controls each part, a ROM (Read Only Memory) that is a storage medium in which fixed data such as an activation program executed by the CPU are written, and a semiconductor memory 11 that is a RAM (Random Access Memory) in which variable data such as work data are written in a manner allowing updating. The HDD 5 stores an application program executed by the CPU. That is, when a user turns ON the digital color copying machine 100, the CPU activates the activation program in the ROM, the application program is read from the HDD 5 into the semiconductor memory 11, and the application program is activated. Since the CPU is operated in accordance with the application program, the printer controller 4 controls the operation of the printer controller part 102. As for the application program stored in the HDD 5, the application program is recorded on an optical information storage medium such as a CD-ROM and a DVD-ROM or a magnetic medium such as a flexible disk, and the recorded application program is installed to the HDD 5. Hence, a portable storage medium, for example, an optical information storage medium such as a CD-ROM and a magnetic medium such as a flexible disk, may be the storage medium storing the application program. Further, the application program may be, for example, downloaded from the outside via a network and installed to the HDD 5.

(2. Description of Various Functions of Digital Color Copying Machine 100).

A more detailed description is given below of the copying function and the image data delivering function together with the operations thereof among the various functions (the copying function, the printer function, the FAX function, and the image data delivering function) of the digital color copying machine 100 structured by the above-mentioned elements.

(2-1. Copying Function)

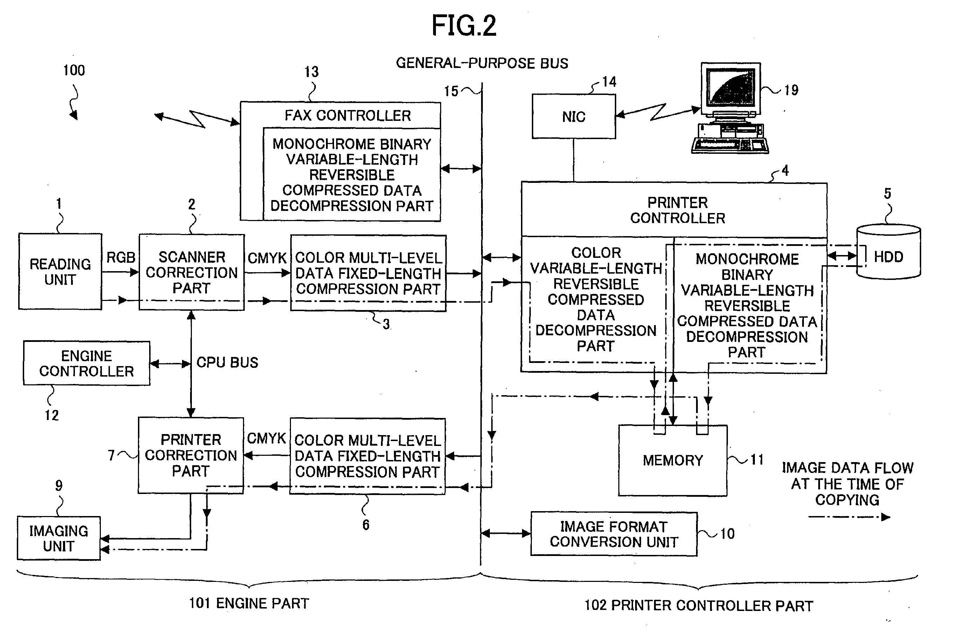

First, referring to FIG. 2, a description is given below of processes at the time when the copying function is used. When reading an original, the original set on an original table is read by the reading unit 1, and data subjected to color separation and separated into R (red), G (green) and B (blue) are sent to the scanner correction part 2.

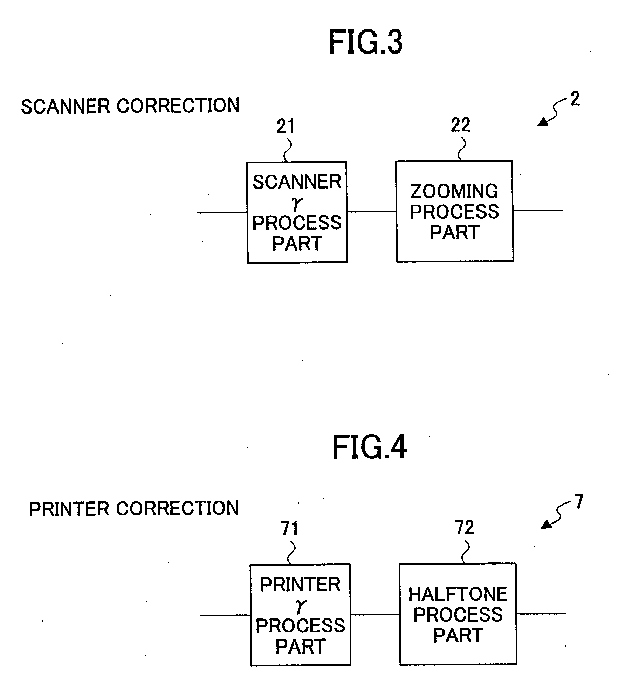

FIG. 3 is a block diagram showing the internal structure of the scanner correction part 2. As shown in FIG. 3, the scanner correction part 2 includes a scanner γ process part 21 and a zooming process part 22. The scanner γ process part performs a scanner γ process, and the zooming process part 22 performs a zooming process.

Eight-bit image data after zooming are compressed and converted to n-bit ($n \leqq 8$) data by the color multi-level data fixed-length compression part 3.

The image data compressed by the color multi-level data fixed-length compression part 3 are sent to the printer controller 4 via the general-purpose bus I/F 15. The printer controller 4 accumulates the sent data in the semiconductor memory 11.

The accumulated data are written to the HDD 5 as required. The reason for accumulating the data in the HDD 5 is to avoid reading an original again even if paper jams at the time of printing and printing does not end normally, and to perform electronic sorting. In addition to this, recently, the digital color copying machine 100 is further provided with a function of accumulating data of read originals and outputting the data again when necessary. Also, this embodiment using the HDD 5 may be used for such a copy server function. Here, image accumulating means is realized.

Accordingly, the image data accumulated in the HDD 5 of this embodiment are read images (image data) that are not subjected to image processing for copying, such as color coordinate transformation from the RGB system to the CMYK system, tone (gradation) correction, and a compression process. The image data accumulated in the HDD of this embodiment are, for example, monochrome image data.

Whatever the case may be, printing is performed by using the accumulated data in the HDD 5. Thus, when printing is performed, the compressed image data in the HDD 5 are temporarily developed (held) in the semiconductor memory 11, sent to the engine part 101 via the general-purpose bus 15, and converted again into 8-bit image data by the color multi-level data fixed-length decompression part 6 of the engine part 101.

The decompressed data are sent to the printer correction part 7. FIG. 4 is a block diagram showing the internal structure of the printer correction part 7. As shown in FIG. 4, the printer correction part 7 includes a printer γ process part 71 and a halftone process part 72. The printer γ process part 71 performs a printer γ correction process. The halftone process part 72 performs a halftone process corresponding to the imaging unit 9, which is provided in a subsequent stage, and transfers the data to the imaging unit 9 as data used for imaging. Then, the data are output on transfer paper.

(2-2. Image Data Delivering Function)

In the system as mentioned above where input image data are temporarily accumulated in the HDD 5 as compression data and thereafter the accumulated data are retrieved from the HDD 5 and used, delivering is performed by using the accumulated data in the HDD 5 in the image data delivering function.

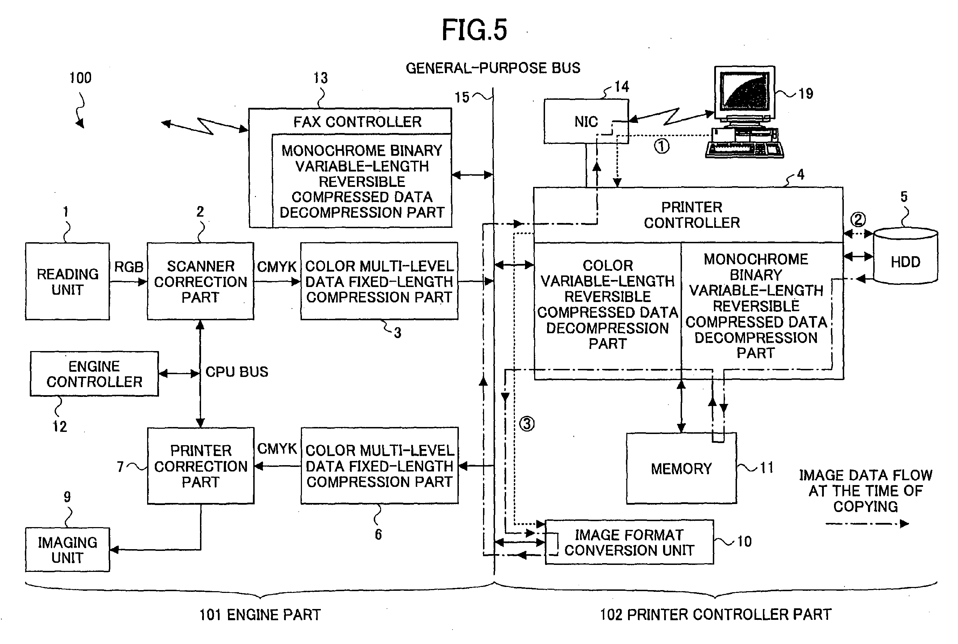

FIG. 5 is a block diagram showing the flow of delivering data at the time of delivering image data by one-dot chain lines. As shown in FIG. 5, the external PC 19, which becomes a client, determines a capture condition (processing condition) for receiving (capturing) the image data from the digital color copying machine 100, and requests the digital color copying machine 100 for the image data by offering the capture condition.

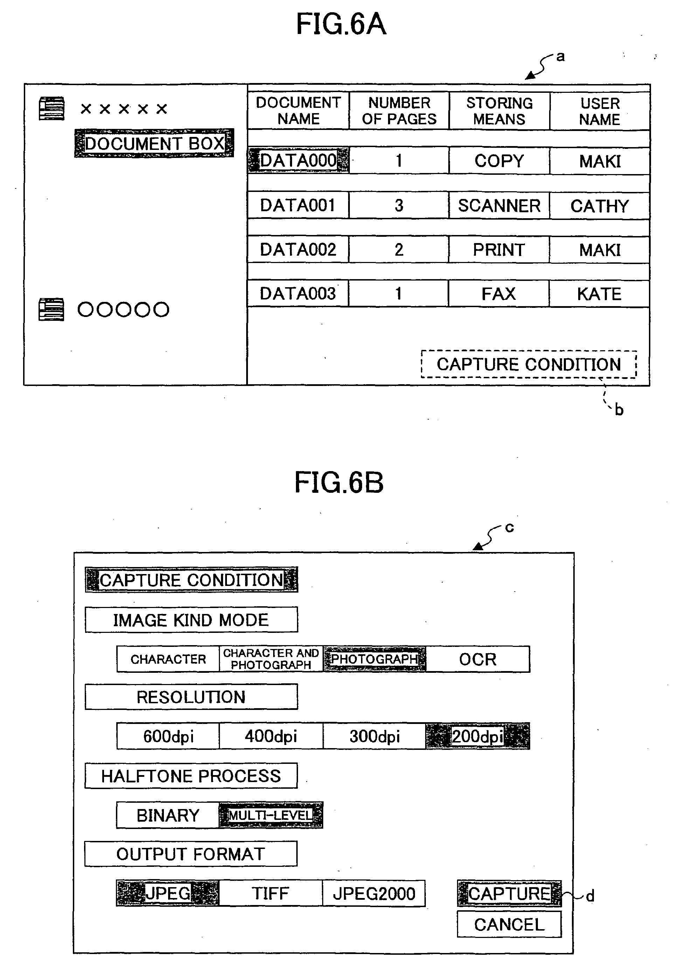

FIGS. 6A and 6B show examples of a display screen image at the time when the application program for receiving (capturing) the image data from the digital color copying machine 100 is activated in the external PC 19. An image data selection screen "a" as shown in FIG. 6A is displayed in the external PC 19. Thus, it is possible to view the image data accumulated in the HDD 5 of the digital color copying machine 100 by means of the external PC 19. A user who operates the external PC 19 selects image data in the image data selection screen "a". In FIG. 6A, "DATA000", which is indicated by hatching, is selected. When a capture condition button "b" is operated in a state where the desired image data are selected, a capture condition selection screen "c" as shown in FIG. 6B is displayed on the external PC 19.

In the capture condition selection screen "c", it is possible to select conditions for capturing image data, such as the image kind mode, resolution, a halftone process, and output format. As for the image kind mode, it is possible to select each of the modes of "character", "character and photograph", "photograph" and "OCR". As for the resolution, it is possible to select 600 dpi, 400 dpi, 300 dpi or 200 dpi. As for the halftone process, it is possible to select binary or multi-level. As for the output format, is it possible to select TIFF, JPEG or JPEG 2000. In the capture condition selection screen "c" as mentioned above, the user operating the external PC 19 selects the conditions for capturing image data, such as the image kind mode, the resolution, the halftone process, and the output format. In FIG. 6B, as indicated by hatching, the following conditions are selected as the capture conditions.

| image kind mode | photograph |
| --- | --- |
| resolution | 200 dpi |
| halftone process | multi-level |
| output format | JPEG |

When a capture button "d" is operated in such a state where the capture conditions are selected as mentioned above, the selected capture conditions are supplied to the printer controller 4 of the digital color copying machine 100.

The printer controller 4 that has received the capture conditions refers to the attributes of the image data accumulated in the HDD 5, and issues an instruction to the image format conversion unit 10 as to what kind of image processing is to be performed.

Upon reception of the instruction from the printer controller 4, the image format conversion unit 10 performs an imaging process (for example, in a case where the image kind mode is the photograph mode, a γ process for the photograph mode and filtering for the photograph mode) in accordance with the selected capture conditions so as to convert the image format of the image data into the image format desired by the user, and transmits the image data to the external PC 19. Here, image data delivering means is realized.

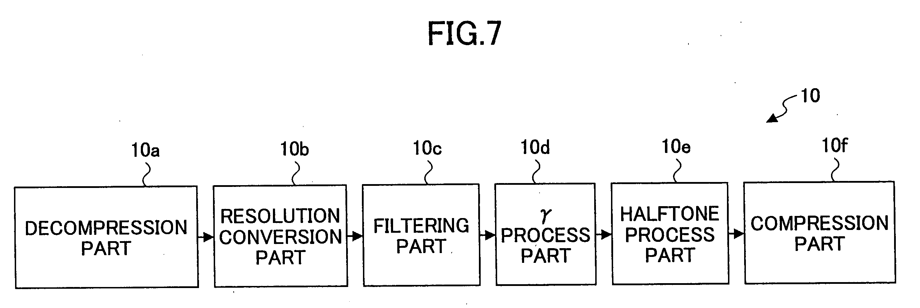

FIG. 7 is a block diagram showing the structure of the image format conversion unit 10. As shown in FIG. 7, upon reception of the instruction from the printer controller 4, the image format conversion unit 10, which converts the data format of delivering image data, performs functions corresponding to a decompression part 10a, a resolution conversion part 10b, a filtering part 10c, a γ process part 10d, a halftone process part 10e, and a compression part 10f. The decompression part 10a decompresses the image data compressed and accumulated in the HDD 5. The decompressed image data are subjected to resolution conversion and converted to a predetermined resolution by the resolution conversion part 10b. Then, the image data are subjected to filtering by the filtering part 10c. The filtering process adjusts the intensity of the image data. The γ process part 10d performs adjustment of concentration characteristics of the image data. The halftone process part 10e quantizes the multi-level data into binary image data. Then, the compression part 10f performs compression coding on the image data according to a predetermined compression coding format. Then, the image data are transmitted to the external PC 19. In the aforementioned manner, the image data of a first data format accumulated in the HDD 5 are output as the image data of a second data format by changing the data format.

A description is given below of conversion of data format by the resolution conversion part 10b. When the resolution of the image data accumulated in the HDD 5 is different from the resolution required by a terminal that is a delivering destination, the resolution conversion part 10b converts the resolution of the image data to be delivered to a specified resolution, thereby enabling the image data to be used by the terminal such as the external PC 19.

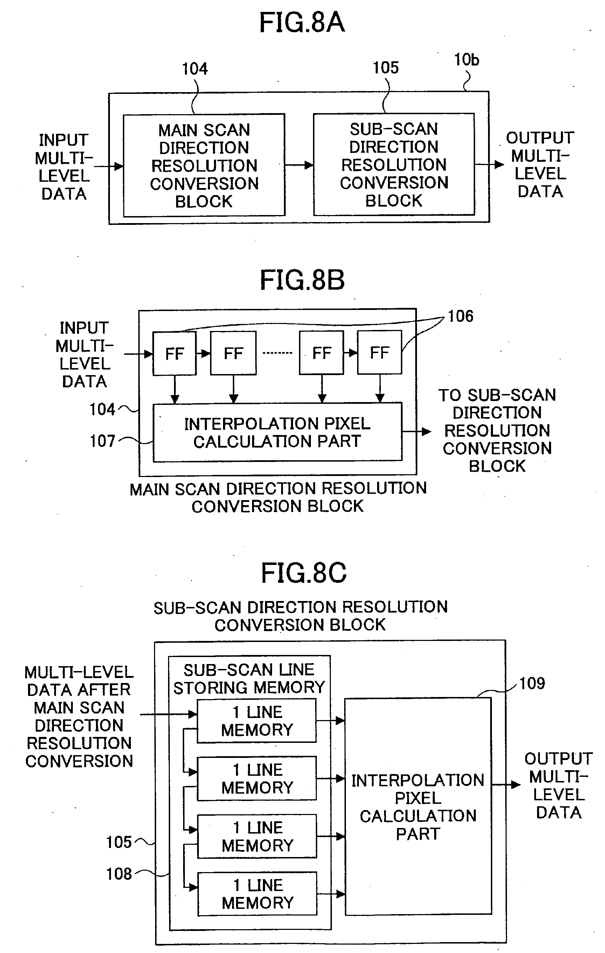

FIGS. 8A, 8B and 8C are diagrams for explaining a resolution conversion function of the resolution conversion part 10b. As shown in FIG. 8A, the resolution conversion part 10b includes conversion process blocks, i.e., a main scan direction resolution conversion block 104 and a sub-scan direction resolution conversion block 105 in this order from the input side. As shown in FIG. 8B, the main scan direction resolution conversion block 104 includes FFs 106 corresponding to pixels in the main scan direction and an interpolation pixel calculation part 107. As shown in FIG. 8C, the sub-scan direction resolution conversion part 105 includes sub-scan line accumulation memory 108 corresponding to a predetermined number of lines and an interpolation pixel calculation part 109. It should be noted that FIGS. 8A through 8C show a case where target pixel data are multi-level data and conversion is performed according to a method capable of converting the resolutions in the main scan direction and the sub-scan direction of image data into arbitrary resolutions.

In the resolution conversion part 10b shown in FIGS. 8A through 8C, in order to convert input multi-level data to the number of data of the specified resolution (dpi), the interpolation pixel calculation part 107 of the main scan direction resolution conversion block 104 performs pixel interpolation in the main scan direction on the input multi-level data. For example, the most-adjacent pixel displacement method, adjacent 2-pixel weighted average method, or cubic function convolution method, which are commonly used, may be applied to calculate pixel data values to be interpolated. The sub-scan direction resolution conversion block 105 calculates the data value of lines to be interpolated by the interpolation pixel calculation part 109 with respect to the multi-level data subjected to resolution conversion in the main scan direction based on reference pixel data in the sub-scan direction accumulated in the sub-scan line accumulation memory 108, which includes line memories each capable of accumulating data subjected to the main scan direction resolution conversion amounting to one line. Similar to the case of pixel interpolation in the main scan direction, the most-adjacent pixel displacement method, adjacent 2 pixel weighted average method, or cubic function convolution method, for example, may be applied to calculation in the interpolation pixel calculation part 109.

Accordingly, since it is possible to convert image data to image data of a desired resolution, it is possible to satisfy data contents required by an external instrument.

A description is given below of conversion of a data format by the filtering part 10c. Filtering modulates the MTF of image data. There are two kinds of filtering: filtering that increases the MTF value of original image data thereby enhancing edges of the image; and filtering that decreases the MTF value of the original image data thereby smoothening the image.

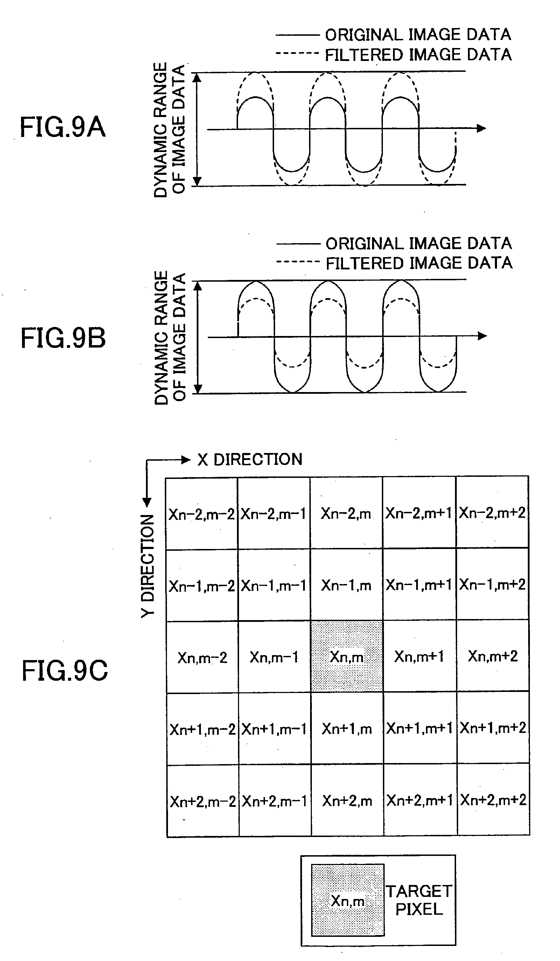

When increasing the MTF of image data, a process that enhances the curve of image frequency is performed as shown in FIG. 9A. In FIG. 9A, the image frequency of original image data is indicated by a continuous line, and the image frequency after filtering is indicated by a dotted line. In addition, the vertical axis represents the dynamic range of image data (image density), and the horizontal axis represents'the raster format reference of image data (the way to refer to the raster-format image data).

Similarly, when smoothening the MTF of image data, a process of relaxing the curve of image frequency is performed as shown in FIG. 9B. In an actual process, two-dimensional image data are handled in units of lines while assuming the raster direction of the image data as a line direction (x direction) and the direction perpendicular to the raster direction as a y direction, and the value of a target pixel is calculated based on the values of pixels surrounding the target pixel.

FIG. 9C shows the 5 x 5 surrounding pixels, having the target pixel in the center thereof, with symbols while assuming the target pixel as $X_{n,m}$.

When increasing the MTF of image data, differential coefficients (hereinafter referred to as "matrix coefficients") corresponding to respective pixels surrounding the target pixel are prepared. When the matrix coefficients are represented with symbols in the same format as the symbols of the surrounding pixels, i.e., $A_{m-2, n-2}$, $A_{m-2, n-1}$, ..., $A_{m, n}$, $A_{m+2, n+1}$, $A_{m+2, n+2}$, then the value Y of the target pixel after the filtering for increasing the MTF of the image data can be represented by the following formulas.

$$B = (X_{m-2, n-2} \times A_{m-2, n-2}) + (X_{m-2, n-1} \times A_{m-2, n-1})$$

$$+ ... + (X_{m+2, n+2} \times A_{m+2, n+2}) \tag{1}$$

$$D = B \times C \tag{2}$$

$$Y = D + X_{n, m}$$

The formula (1) performs matrix multiplication on the image data and the matrix coefficients obtained by using the differential coefficients. The value of B obtained by the formula (1) is an enhancing component of the image to be enhanced by the filtering. The formula (2) arbitrarily amplifies and deamplifies the enhancing component. The enhancing value to be enhanced by the filtering obtained by the formula (2) is added to the value of the target pixel, thereby calculating the final value of the target pixel (the formula (3)). By converting all pixels of the image data with the above-mentioned formulas, the MTF of the image data is increased.

When smoothening image data, the target pixel and the surrounding pixels are added and divided by the number of pixels E, thereby obtaining the average value of the target value and the surrounding pixels. By converting all pixels of the image data with such a formula, the image data are smoothened. When, in order to adjust the degree of smoothening, the target pixel and the surrounding pixels are not averaged by assuming the weight thereof as equivalent, i.e., each pixel is assumed to have a different weight, it is possible to adjust the value Y of the target value by substituting the matrix coefficients for arbitrary integers.

$$Y = (X_{m-2, n-2} \times A_{m-2, n-2}) + (X_{m-2, n-1} \times A_{m-2, n-1})$$

$$+ ... + (X_{m+2, n+2} \times A_{m+2, n+2})/E \tag{4}$$

With the above-mentioned processes, the filtering part 10c can realize the filtering function capable of modulating an MTF with respect to multi-level image data. Hence, if an original image is an image mainly including characters, the quality of the image is improved by enhancing the MTF. On the other hand, when an original image is an image mainly including images, the quality of the image is improved by smoothening the image to some extent. In the aforementioned manner, by selecting the filtering coefficient depending on the kind of an image, it is possible to obtain a high quality image.

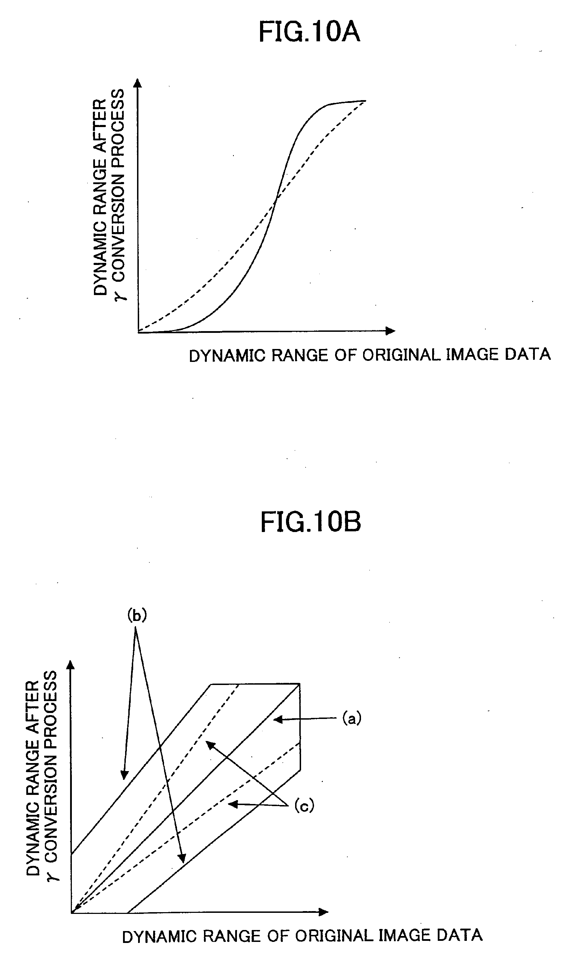

A description is given below of conversion of a data format by the $\gamma$ process part 10d. The $\gamma$ process part 10d varies the concentration gradient and concentration characteristics of an image. As shown in FIG. 10A, if the continuous line in FIG. 10A represents a $\gamma$ conversion table, the values corresponding to original data (horizontal axis) are converted to the value of image data (vertical axis) after $\gamma$ conversion. By varying the curve of the $\gamma$ conversion table, it is possible to convert image data to image data having a desired concentration distribution. For example, if the $\gamma$ conversion table as indicated by the dotted line in FIG. 10A is used, compared to the $\gamma$ conversion table indicated by the continuous line, it is possible to convert image data to image data (after $\gamma$ conversion) having a relaxed concentration gradient. It should be noted that, in FIG. 10A, the concentration is increased in the direction indicated by the arrows in FIG. 10A.

A description is given below of a method for creating a $\gamma$ conversion table with reference to a linear $\gamma$ conversion table (a continuous line (a)) extending in a 45-degree direction from the origin.

When increasing/decreasing the entire concentration of an image without changing the concentration characteristics, the $\gamma$ conversion table may be moved in parallel as indicated by the continuous lines (b) in FIG. 10B. When changing the concentration gradient, the slope of the $\gamma$ conversion table may be varied as indicated by the dotted lines (c) in FIG. 10B. When varying the concentration characteristics, by varying the curve of a $\gamma$ conversion table that can be represented with a continuous curved line such as shown in FIG. 10A, it is possible to obtain desired concentration characteristics.

In the aforementioned manner, the $\gamma$ process part 10d can realize the $\gamma$ conversion process function capable of varying the concentration gradient and concentration characteristics of image data. Hence, it is possible to obtain a high quality image by selecting a $\gamma$ curve depending on the kind of an image.

A description is given below of conversion of a data format by the halftone process part 10e. The halftone process part 10e binarizes multi-level image data by performing a halftone process thereon. The halftone process is a process that quantizes multi-level image data to binary data or data having a small tone level close to binary. There are various methods for performing the halftone process. Here, a description is given of the simple quantization method, the dither method, and the error diffusion method, which are generally used. However, it is assumed for convenience that the tone (gradation) level for quantization is binary.

The simple quantization method converts the tone level of image data to binary while using an arbitrary value in a dynamic range of multi-level image data as a threshold value. For example, when quantizing multi-level image data having the dynamic range of 0-255, i.e., 256 tones, to image data represented by using combinations of 0 and 1, if the threshold value is 128, the quantization value for image data having a dynamic range value 100 is 0, and the quantization value for _image data having a dynamic range value 200 is 1.

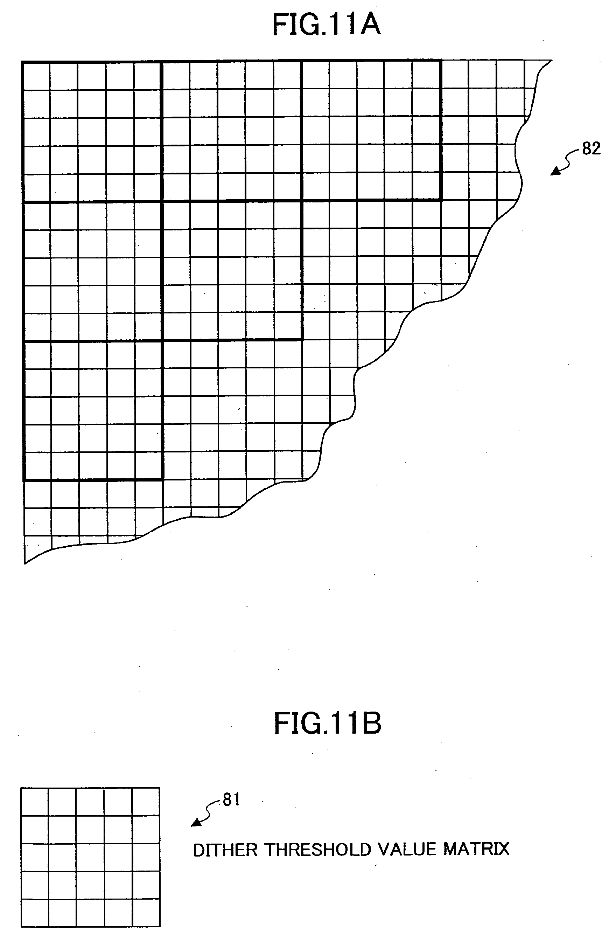

The dither method performs binarization for each pixel by using a threshold value matrix 81 as shown in FIG. 11B and applying the threshold value matrix 81 to image data 82 such that 1 threshold value corresponds to 1 pixel. When the threshold values in the threshold value matrix 81 are varied within the dynamic range of the image data 82, the resolution of an image may be degraded. However, it is possible to reproduce an intermediate concentration even for image data having two tones.

Similar to the simple quantization method, the error diffusion method performs conversion into two tones by using an arbitrary threshold value. In the error diffusion method, quantization error generated in quantization are accumulated, and quantization with respect to a target pixel under processing is performed by taking into consideration the determined errors in the surrounding pixels that have already been subjected to quantization in raster order. Thereby, the error diffusion method performs,a halftone process that aims for minimizing errors due to quantization in image data in total.

The errors generated in quantization are represented in the case as follows. In a case where multi-level image data having the dynamic range of 0-255, i.e., 256 tones, are converted to image data represented by using combinations of 0 and 1, the quantization value of image data having a dynamic range value 100 is 0. However, though the image data includes intermediate concentration information, i.e., 100, the information is handled as the lowest value 0. Thus, the intermediate concentration information of the image data is lost. Hence, the quantization error of the image data is "100 = 100 - 0" (the lowest value of the dynamic range). In addition, the quantization value of image data having a dynamic range value 200 is 1. In this case, though the image data includes intermediate concentration information, i. e., 200, the information is handled as the highest value 1. Thus, the quantization error of the image data is "-55 = 200 - 255" (the highest value of the dynamic range).

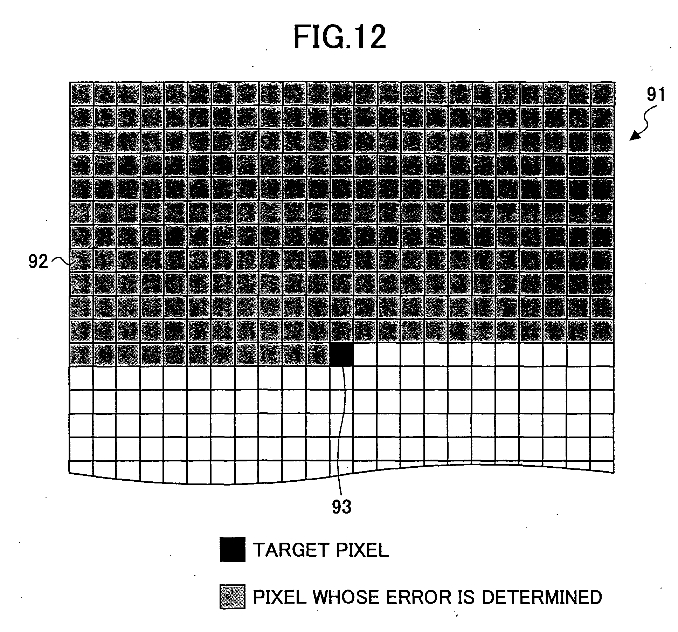

After quantization is performed on each pixel, if such quantization error values are accumulated as data different from image data, as shown in FIG. 12, considering that image data 91 are processed in raster order, the errors in quantization are already determined and accumulated with respect to hatched pixels 92. In the error diffusion method, by performing conversion into two tones after adding the average of the determined error values of the pixels surrounding a target pixel 93 to the value of the target pixel 93, it is possible to reduce the lack of intermediate concentration information, which is caused by the quantization errors, in image data in total.

With the above-mentioned methods, the halftone process part 10e can perform a binarization process on multi-level image data. In the aforementioned manner, by reducing the amount of data and selecting the halftone process depending on the kind of an image, it is possible to obtain a high quality image.

Accordingly, since it is possible to convert image data to image data having a desired tone value, it is possible to satisfy the data contents required by an external instrument.

A description is given below of a specific process performed in a case where image data are output to, for example, the external PC 19. A case is assumed where the following conditions are selected as the capture conditions and delivered to the printer controller 4.

| | |
|---|---|
| image kind mode | photograph |
| resolution | 200 dpi |
| halftone process | multi-level |
| output format | JPEG |

In this case, the image format conversion unit 10 performs image processing by setting the processing conditions (parameters) as required.

In this case, a resolution conversion parameter value used for resolution conversion in the resolution conversion part 10b is determined from the resolution requested by the user and the resolution (here, 600 dpi) of image data accumulated in the HDD 5. That is, resolution conversion from 600 dpi to 200 dpi is performed.

In the filtering part 10c and the γ process part 10d following the resolution conversion part 10c, coefficients corresponding to the requirement from the external PC 19 are selected. In this case, since the image kind mode requested by the user is the photograph mode, the coefficient for the photograph mode is selected in each of the filtering part 10c and the γ process part 10d.

In addition, since "multi-level" is selected for the halftone process, the halftone process part 10e does not perform a process.

In the compression part 10f following the halftone process part 10e, a conversion process to the JPEG file format is performed. Accordingly, since it is possible to convert image data to image data having a desired file format, it is possible to satisfy the data contents required by an external instrument.

In the aforementioned manner, it is possible for the external PC 19 to receive (capture) from the digital color copying machine 100 the image data (read image that is not subjected to imaging processes for copying such as color coordinate conversion from the RGB system to the CMYK system, tone correction, and a compression process of image data) accumulated in the HDD 5 of the digital color copying machine 100 in a state where the image data are converted to the image format according to the capture conditions supplied from the external PC 19.

Here, image data input in a first image kind mode and accumulated in a storage device are converted to image data of a second image kind mode in accordance with the processing conditions, and transmitted to an external instrument via a network. Thus, it is possible for the external instrument to receive from an image processing apparatus image data whose image kind mode is converted to a desired image kind mode. Hence, it is possible to use the image data accumulated in the storage device for various purposes. Additionally, since conversion of image kind mode is performed on the image data that are already accumulated in the storage device, it is possible for plural people to receive the same image data in different image kind modes.

Further, since it is possible to perform conversion to the image kind mode in accordance with processing conditions requested by the external instrument irrespective of the image kind mode in a copying operation, it is possible to satisfy requirements related to the image kind mode by the external instrument.

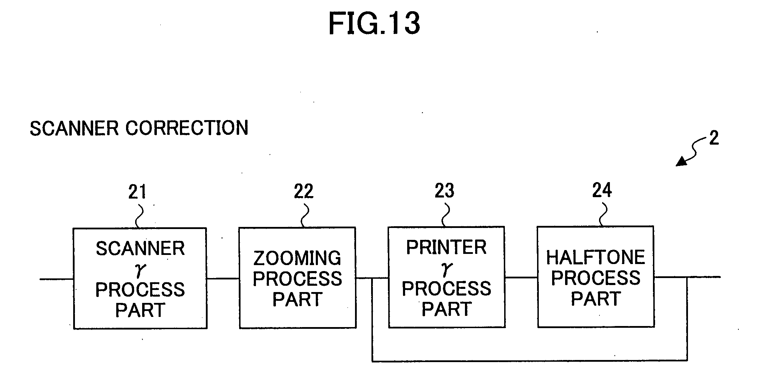

Referring to FIGS. 13 through 15, a description is given below of a second embodiment of the present invention. In the description of the second embodiment, those parts that are the same as those corresponding parts in the description of the first embodiment are designated by the same reference numerals, and a description thereof is omitted. In the first embodiment, the image data accumulated in the HDD 5 are read image data that are not subjected to image processing for copying. On the other hand, in the second embodiment, the image data accumulated in the HDD 5 are read image data that are subjected to the image processing for copying. In this point, the second embodiment differs from the first embodiment.

(1. Description of Various Functions of Digital Color Copying Machine 100)

A detailed description is given below of the copying function and the image data delivering function together with the operations thereof among the various functions (the copying function, the printer function, the FAX function, and the image data delivering function) of the digital color copying machine.

(1-1. Copying Function)

A description is given below of processes performed when using the copying function in this embodiment. As described above with reference to FIG. 2, when reading an original (manuscript), the original set to the original table is read by the reading unit 1, and data subjected to color separation and separated into R (red), G (green) and B (blue) are sent to the scanner correction part 2.

FIG. 13 is a block diagram showing the internal structure of the scanner correction part 2 according to this embodiment. As shown in FIG. 13, the scanner correction part 2 includes a printer $\gamma$ process part 23 and a halftone process part 24 in addition to the scanner $\gamma$ process part 21 and the zooming process part 22, which are described above in the first embodiment. The scanner $\gamma$ process part performs a scanner $\gamma$ process, and the zooming process part 22 performs a zooming process. The scanner correction part 2 performs the scanner $\gamma$ process in the scanner $\gamma$ process part 21, the zooming process in the zooming process part 22, a printer $\gamma$ process in the printer $\gamma$ process part 23, and a tone process in the halftone process part 24.

Multi-level or binary image data subjected to the tone process are compressed and converted to data of n bits (n $\leqq$ 8) by the color multi-level data fixed-length compression part 3. It should be noted that binary image data pass through the path of non-compression.

The image data compressed by the color multi-level data fixed-length compression part 3 are transmitted to the printer controller 4 via the general-purpose bus I/F 15. The printer controller 4 includes the semiconductor memory 11 and the accumulated transmitted data therein.

The accumulated data are written to the HDD 5 as required. The reason for accumulating the data in the HDD 5 is to avoid reading an original again even if paper jams at the time of printing and printing does not end normally, and to perform electric sorting. In addition to this, recently, the digital color copying machine 100 has been further provided with the function of accumulating data of read originals and outputting the data again when necessary. Also in this embodiment, the HDD 5 may be used for such a copy server function.

Accordingly, the image data accumulated in the HDD 5 in this embodiment are read image data that are subjected to the image process for copying such as color coordinate conversion from the RGB system to the CMYK system, tone correction, and a compression process of image data. For example, the image data may be color image data.

Whatever the case may be, printing is performed by using the accumulated data in the HDD 5. Thus, when printing is performed, the compressed image data in the HDD 5 are temporarily developed (held) in the semiconductor memory 11, sent to the engine part 101 via the general-purpose bus 15, and converted to multi-level or binary image data by the color multi-level data fixed-length decompression part 6 of the engine part 101.

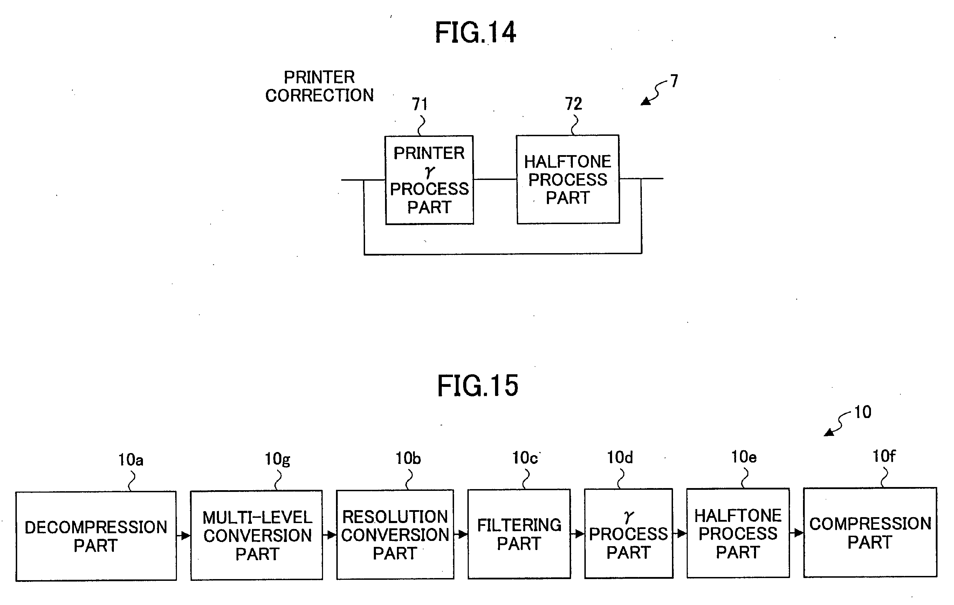

The decompressed data are transmitted to the printer correction part 7. FIG. 14 is a block diagram showing the internal structure of the printer correction part 7. As shown in FIG. 14, the printer correction part 7 includes the printer $\gamma$ process part 71 and the halftone process part 72. The printer $\gamma$ process part 71 performs the printer $\gamma$ correction process. The halftone process part 72 performs the halftone process corresponding to the imaging unit 9, which is provided in a subsequent stage, and transfers the data to the imaging unit 9 as data used for imaging. Then, the data are output on transfer paper. In a case where the image data in the HDD 5 are subjected to the printer $\gamma$ process and the tone process by the scanner correction part 2, the predetermined processes are not performed in the printer $\gamma$ process part 71 and the halftone process part 72.

(1-2. Image Data Delivering Function)

In the system as mentioned above where data of an input image are temporarily accumulated in the HDD 5 as compression data and thereafter the accumulated data are retrieved from the HDD 5 and used, delivering is performed by using the accumulated data in the HDD 5 in the image data delivering function.

As shown in FIG. 5, the external PC 19, which becomes a client, determines the capture condition for receiving (capturing) the image data from the digital color copying machine 100, and requests the digital color copying machine 100 to provide the image data by offering the capture conditions.

The printer controller 4 that has received the capture conditions refers to the attributes of the image data accumulated in the HDD 5, and issues an instruction to the image format conversion unit 10 as to what kind of image processing is to be performed.

Upon reception of the instruction from the printer controller 4, the image format conversion unit 10 performs image processing (for example, in a case where the image kind mode is the photograph mode, the γ process for the photograph mode and the filtering for the photograph mode) in accordance with the selected capture conditions so as to convert the image format of the image data into the image format desired by the user, and transmits the image data to the external PC 19.

FIG. 15 is a block diagram showing the structure of the image format conversion unit 10. As shown in FIG. 15, upon reception of the instruction from the printer controller 4, the image format conversion unit 10, which converts the data format of delivering image data, performs functions corresponding to the decompression part 10a, a multi-level conversion part 10g, the resolution conversion part 10b, the filtering part 10c, the γ process part 10d, the halftone process part 10e, and the compression part 10f. The decompression part 10a decompresses the image data compressed and accumulated in the HDD 5. The decompressed image data are converted to multi-level by the multi-level conversion part 10g and subjected to resolution conversion and converted to a predetermined resolution by the resolution conversion part 10b. Then, the image data are subjected to filtering by the filtering part 10c. The filtering process adjusts the intensity of the image data. The γ process part 10d performs adjustment of concentration characteristics of the image data. The halftone process part 10e quantizes the multi-level data into binary image data. Then, the compression part 10f performs compression coding on the image data according to a predetermined compression coding format. Then, the image data are transmitted to the external PC 19. In the aforementioned manner, the image data of the first data format accumulated in the HDD 5 are output as the image data of the second data format by changing the data format.

A description is given below of the multi-level conversion part 10g of the image format conversion unit 10 of this embodiment. Since the descriptions of the resolution conversion part 10b, the filtering part 10c, the γ process part 10d, and the halftone process part 10e are given above, here, the descriptions thereof are omitted.

In a case where binary print output data accumulated in the HDD 5 are image data to be delivered, the multi-level conversion part 10g uses a method for converting m-value data into n-value data (n > m) in its multi-value conversion function, thereby enabling the print output data to be used by a terminal such as the external PC 19.

Here, a description is given below of a case where target image data (image data to be delivered) are binary data and the tone level thereof is converted to 256 (256-level data) by means of the multi-value conversion function. The following formula (5) represents a formula used for multi-level conversion.

output 256-level data[i,j]

$$= \frac{1}{256} \sum_{x=-3}^{3} \sum_{y=-3}^{3} (\text{filter coefficient}[x,y]$$

$$\text{x pixel data}[i+x, j+y]) \quad ...(5)$$

filter coefficient[x,y]

$$= \begin{bmatrix} 1 & 2 & 3 & 4 & 3 & 2 & 1 \\ 2 & 3 & 7 & 8 & 7 & 4 & 2 \\ 3 & 7 & 9 & 11 & 9 & 7 & 3 \\ 2 & 3 & 7 & 8 & 7 & 4 & 2 \\ 1 & 2 & 3 & 4 & 3 & 2 & 1 \end{bmatrix}$$

In a case where the target image data are binary data, a process using the spatial filter represented by the above formula (5) is performed with reference to pixels surrounding (within a two-dimensional matrix) a 1-bit target pixel. When the value of 1-bit data is 0, the 1-bit data are converted to 8-bit data as 0×00, and when the value of 1-bit data is 1, the 1-bit data are converted to 8-bit data as 0×FF Then, a filter operation is performed based on the filter (matrix) coefficients appended to the above formula (5) and the formula (5). By performing the filter operation, it is possible to convert the target pixel data from binary to 256-level.

Additionally, in a case where data are smaller than 8 bits, e.g., 2-bit, 3-bit or 4-bit, the data are converted to 8 bits by using the spatial filter, which performs smoothening. It should be noted that conversion is not particularly performed when input data are multi-level data.

A description is given below of a specific case where image data are output to, for example, the external PC 19. For example, it is assumed that the following conditions are selected as the capture conditions and supplied to the printer controller 4.

| image kind mode | photograph |
|---|---|
| resolution | 200 dpi |
| halftone process | multi-level |
| output format | JPEG |

In this case, the image format conversion unit 10 sets processing conditions (parameters) in accordance with the requirement and performs image processing.

In this example, after the image data (image formation image) accumulated in the HDD 5 are converted to multi-level by the multi-level conversion part 10g, the following process is performed.

A resolution conversion parameter value used for resolution conversion in the resolution conversion part 10b is determined based on the requirement for the resolution by the user and the resolution (here, 600 dpi) of the image data accumulated in the HDD 5. That is, resolution conversion from 600 dpi to 200 dpi is performed.

In the filtering part 10c and the γ process part 10d, which follow the resolution conversion part 10b, coefficients corresponding to the requirement from the external PC 19 are selected. In this example, since the image kind mode requested by the user is the photograph mode, the coefficient for the photograph mode is selected in each of the filtering part 10c and the γ process part 10d.

In addition, since "multi-level" is selected, the halftone process part 10e does not perform a process. In the compression part 10f, which follows the halftone process part 10e, a conversion process to the JPEG file format is performed.

In the aforementioned manner, it is possible for the external PC 19 to receive (capture) from the digital color copying machine 100 the image data (the image formation data subjected to image processing for copying such as color coordinate conversion from the RGB system to the CMYK system, tone correction, and a compression process) accumulated in the HDD 5 of the digital color copying machine 100 in a state where the image format is converted in accordance with the capture conditions supplied from the external PC 19.

Here, the image data input in the first image kind mode and accumulated in the storage device are converted to image data of the second image kind mode in accordance with the processing conditions, and transmitted to the external instrument via the network. Thus, it is possible for the external instrument to receive from the image processing apparatus image data whose image kind mode is converted to the desired image kind mode. Hence, it is possible to use the image data accumulated in the storage device for various purposes. Additionally, since conversion of image kind mode is performed on the image data that are already accumulated in the storage device, it is possible for plural people to receive the same image data in different image kind modes.

Further, since it is possible to perform conversion to the image kind mode in accordance with processing conditions requested by the external instrument irrespective of the image kind mode in a copying operation, it is possible to satisfy requirements related to the image kind mode by the external instrument.

In each of the above embodiments, the external PC 19 sets the capture conditions and receives (captures) the image data from the digital color copying machine 100. However, this is not a limitation. For example, delivering conditions (processing conditions) may be set by means of an operation part (operations panel) P of the digital color copying machine 100 and image data may be delivered to the predetermined external PC 19.

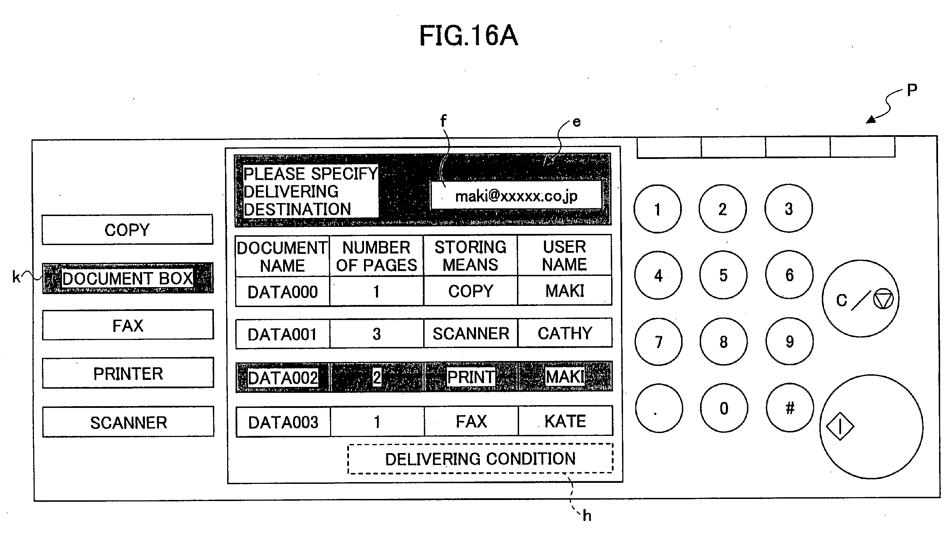

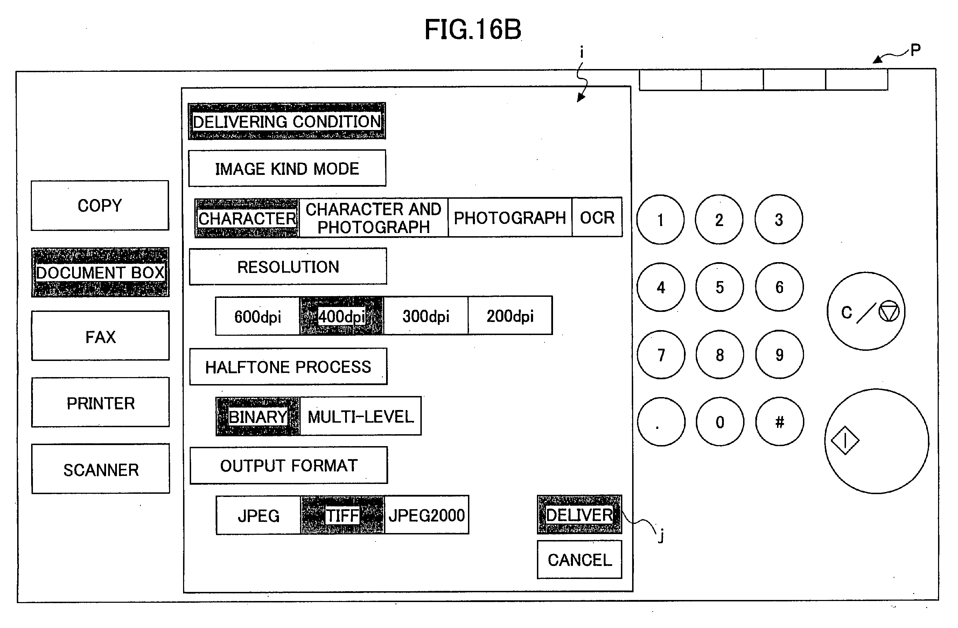

FIGS. 16A and 16B show examples of a display screen image displayed on the operation part P of the digital color copying machine 100 when a "document box mode key" k for delivering image data from the digital color copying machine 100 to the external PC 19 is selected. An image data selection screen "e" as shown in FIG. 16A is displayed on the operation part P, and it is possible to view the image data accumulated in the HDD 5 of the digital color copying machine 100. The user of the digital color copying machine 100 selects image data to be received in the image data selection screen "e". In FIG. 16A, "DATA002" indicated by hatching is selected. In addition, the user of the digital color copying machine 100 also specifies a delivering destination in a delivering destination specification field "f" of the image data selection screen "e". In FIG. 16A, the delivering destination is specified by an e-mail address. However, the name of a PC connected to the network may be specified instead. When a delivering condition button "h" is operated in a state where the image data to be delivered is selected and the delivering destination is specified in the aforementioned manner, a delivering condition selection screen "i" shown in FIG. 16B is displayed on the operation part P.

In the delivering condition selection screen "i", it is possible to select conditions for capturing image data such as the image kind mode, the resolution, the halftone process, and the output format. In this embodiment, as for the image kind mode, it is possible to select each of the modes of "character", "character and photograph", "photograph" and "OCR". As for the resolution, it is possible to select 600 dpi, 400 dpi, 300 dpi or 200 dpi. As for the halftone process, it is possible to select binary or multi-level. As for the output format, is it possible to select TIFF, JPEG or JPEG 2000. In the capture condition selection screen "c" as mentioned above, the user operating the external PC 19 selects the conditions for capturing image data, such as the image kind mode, the resolution, the halftone process, and the output format. In FIG. 16B, as indicated by hatching, the following conditions are selected as the delivering conditions.

| image kind mode | character |
|---|---|
| resolution | 400 dpi |
| halftone process | binary |
| output format | TIFF |

When a deliver button "j" is operated in such a state where the delivering conditions are selected as mentioned above, the selected delivering conditions are supplied to the printer controller 4 of the digital color copying machine 100.

The printer controller 4 that has received the delivering conditions refers to the attributes of the image data accumulated in the HDD 5, and issues an instruction to the image format conversion unit 10 as to what kind of image processing is to be performed.

Here, irrespective of the image kind mode at the time of the copying operation, it is possible to perform conversion to an image kind mode in accordance with processing conditions requested by means of the operation part P provided to the digital color copying machine 100, and it is possible to specify by means of the operation part P provided to the digital color copying machine 100 an external instrument that is the transmission destination of image data subjected to the conversion to the image kind mode.

According to the present invention, the image data input in the first image kind mode and accumulated in the storage device are converted to the image data of the second image kind mode in accordance with the processing condition, and transmitted to the external instrument connected to the image processing apparatus via the network. Hence, it is possible for the external instrument to receive from the image processing apparatus the image data whose image kind mode is converted to a desired image kind mode. Thus, it is possible to use the image data accumulated in the storage device for various purposes. In addition, since conversion of image kind mode is performed on the image data that are already accumulated in the storage device, it is possible for plural people to receive the same image data in different image kind modes.

Additionally, the present invention may be applied to, for example, change of the image kind mode with respect to monochrome image data.

Additionally, the present invention may be applied to, for example, change of the image kind mode with respect to color image data.

Additionally, irrespective of the image kind mode at the time of a copying operation, it is possible to perform conversion to an image kind mode in accordance with the processing condition requested by the external instrument, and it is possible to satisfy a requirement related to the image kind mode required by the external instrument.

Additionally, irrespective of the image kind mode at the time of a copying operation, it is possible to perform conversion to an image kind mode in accordance with the processing condition requested by means of the operation part provided to the image processing apparatus, and it is possible to specify by means of the operation part provided to the image processing apparatus an external instrument that is the transmission destination of the image data subjected to the conversion to the image kind mode. Hence, it is possible to satisfy a requirement related to the image kind mode required with respect to the external instrument.

Additionally, it is possible to positively convert the image kind mode of image data from the first image kind mode to the second image kind mode.

Additionally, according to the present invention, since it is possible to convert image data to image data having a desired resolution, it is possible to satisfy the data contents required by the external instrument.

Additionally, according to the present invention, since it is possible to convert image data to image data having a desired tone level, it is possible to satisfy the data contents required by the external instrument.

Additionally, according to the present invention, since it is possible to convert image data to image data of a desired file format, it is possible to satisfy the data contents required by the external instrument.

The present invention is not limited to the specifically disclosed embodiments, and variations and modifications may be made without departing from the scope of the present invention.

**Claims**

1.  An image processing apparatus that includes an image reading apparatus for reading an image of a document and a printer engine performing image formation on a medium based on image data of the read image of the document, and performs a copying function in accordance with various image type modes, said image processing apparatus **characterised by** comprising:

    an image accumulation part for accumulating, in a storage device, image data that are input in a first image type mode;
    a data format conversion part for converting the image data accumulated in the storage device by the image accumulation part to image data of a second image type mode in accordance with a processing condition; and
    an image data delivering part for transmitting, to an external instrument connected to the image processing apparatus via a network, the image data of the second image type mode that has been converted by the data format conversion part.

2.  The image processing apparatus as claimed in claim 1, wherein the image data accumulated in the storage device by the image accumulation part are the image data generated based on the image read by the image reading apparatus and not subjected to image processing for copying.

3.  The image processing apparatus as claimed in claim 1, wherein the image data accumulated in the storage device by the image accumulation part are the image data used for the image formation by the printer engine and subjected to image processing for copying.

4.  The image processing apparatus as claimed in claim 1, 2 or 3 wherein processing conditions are specified by the external instrument.

5.  The image processing apparatus as claimed in claims 1, 2, 3 or 4 wherein the external instrument, which is a transmission destination of the image data of the second image type mode that has been converted by the data format conversion part in accordance with the processing condition, is specified by an operation part provided to the image processing apparatus.

6.  The image processing apparatus as claimed in claim 1, 2, 3, 4, or 5, wherein the data format conversion part includes a filtering part for adjusting the intensity of the image data and a $\gamma$ process part for adjusting the concentration characteristics of the image data, and
    wherein the image data input in the first image type mode are converted to the image data of the second image type mode by performing processes in the filtering part and the $\gamma$ process part by selecting coefficients in accordance with the processing condition.

7.  The image processing apparatus as claimed in claim 1, 2, 3, 4, 5, or 6, wherein the data format conversion part includes a resolution conversion part that converts a resolution of the image data accumulated in the storage device by the large accumulation part.

8.  The image processing apparatus as claimed in any one of claims 1 to 7, wherein the data format conversion part includes a halftone process part that converts a tone level of the image data accumulated in the storage device by the image accumulation part.

9.  The image processing apparatus as claimed in any one of claims 1 to 8, wherein the data format conversion part includes a compression part that converts a file format of the image data accumulated in the storage device by the image accumulation part.

10. A computer-readable program for controlling an image processing apparatus that includes an image reading apparatus reading an image of a document and a printer engine preforming image formation on a medium based on image data of the read image of the document, and performs a copying function in accordance with various image kind modes, said program comprising code means that when executed by a computer system instruct the computer system to carry out:

    an image accumulation function of accumulating, in a storage device, image data that are input in a first image type mode;

a data format conversion function of converting the image data accumulated in the storage device by the image accumulation function to image data of a second image type mode in accordance with a processing condition; and

an image data delivering function of transmitting, to an external instrument connected to the image processing apparatus via a network, the image'data of the second image type mode subjected to conversion by the data format conversion part.

**11.** The program as claimed in claim 10, wherein the image data accumulated in the storage device by the image accumulation function are the image data generated based on the image read by the image reading apparatus and not subjected to image processing for copying.

**12.** The program as claimed in claim 10, wherein the image data accumulated in the storage device by the image accumulation function are the image data used for the image formation by the printer engine and subjected to image processing for copying.

**13.** The program as claimed in claim 10, 11 or 12 wherein the processing condition is specified by the external instrument.

**14.** The program as claimed in claim 10, 11, 12 or 13 wherein the external instrument, which is a transmission destination of the image data of the second image kind mode subjected to the conversion by the data format conversion part in accordance with the processing condition, is specified by an operation part provided to the image processing apparatus.

**15.** The program as claimed in any one of claims 10 to 14 wherein the data format conversion function includes a filtering function of adjusting the intensity of the image data and a $\gamma$ process function of adjusting the concentration characteristics of the image data, and

wherein the image data input in the first image type mode are converted to the image data of the second image type mode by causing the computer to carry out the filtering function and the $\gamma$ process function by selecting coefficients in accordance with the processing condition.

**16.** The program as claimed in any one of claims 10 to 15 wherein the data format conversion function causes the computer to carry out a resolution conversion function that converts a resolution of the image data accumulated in the storage device by the image accumulation function.

**17.** The program as claimed in any one of claims 10 to 16 wherein the data format conversion function causes the computer to carry out a halftone process function that converts a tone level of the image data accumulated in the storage device by the image accumulation function.

**18.** The program as claimed in any one of claims 10 to 27 wherein the data format conversion function causes the computer to carry out a compression function that converts a file format of the image data accumulated in the storage device by the image accumulation function.

**19.** A computer-readable storage medium storing a computer-readable program according to any one of claims 10 to 18.

**20.** An image processing method to be used in an image processing apparatus that includes an image reading apparatus reading an image of a document and a printer engine performing image formation on a medium based on image data of the read image of the document, and performs a copying function in accordance with various image kind modes, said image processing method **characterized by** comprising the steps of:

accumulating, in a storage device, image data that are input in a first image type mode;
converting the image data accumulated in the storage device in the step of accumulating to image data of a second image type mode in accordance with a processing condition; and
transmitting, to an external instrument connected to the image processing apparatus via a network, the image data of the second image type mode subjected to conversion in the step of converting.

# FIG.1

GENERAL-PURPOSE BUS

**13** FAX CONTROLLER
- MONOCHROME BINARY VARIABLE-LENGTH REVERSIBLE COMPRESSED DATA DECOMPRESSION PART

**15**

**14** NIC

**19**

**1** READING UNIT

**2** SCANNER CORRECTION PART

**3** COLOR MULTI-LEVEL DATA FIXED-LENGTH COMPRESSION PART

RGB

CMYK

**4** PRINTER CONTROLLER
- COLOR VARIABLE-LENGTH REVERSIBLE COMPRESSED DATA DECOMPRESSION PART
- MONOCHROME BINARY VARIABLE-LENGTH REVERSIBLE COMPRESSED DATA DECOMPRESSION PART

**5** HDD

**12** ENGINE CONTROLLER

CPU BUS

**7** PRINTER CORRECTION PART

CMYK

**6** COLOR MULTI-LEVEL DATA FIXED-LENGTH COMPRESSION PART

**11** MEMORY

**9** IMAGING UNIT

**10** IMAGE FORMAT CONVERSION UNIT

**101 ENGINE PART**

**102 PRINTER CONTROLLER PART**

EP 1 501 273 A1

# FIG.2

GENERAL-PURPOSE BUS

100

13

15

14

19

**FAX CONTROLLER**

MONOCHROME BINARY
VARIABLE-LENGTH
REVERSIBLE
COMPRESSED DATA
DECOMPRESSION PART

**NIC**

4

5

**PRINTER
CONTROLLER**

HDD

1

2

| READING UNIT | RGB | SCANNER CORRECTION PART | CMYK | COLOR MULTI-LEVEL DATA FIXED-LENGTH COMPRESSION PART |

3

COLOR
VARIABLE-LENGTH
REVERSIBLE
COMPRESSED
DATA
DECOMPRESSION
PART

MONOCHROME
BINARY
VARIABLE-LENGTH
REVERSIBLE
COMPRESSED DATA
DECOMPRESSION
PART

**ENGINE CONTROLLER**

CPU BUS

12

7

| PRINTER CORRECTION PART | CMYK | COLOR MULTI-LEVEL DATA FIXED-LENGTH COMPRESSION PART |

**MEMORY** ~11

IMAGE DATA FLOW
AT THE TIME OF
COPYING

9

6

**IMAGING UNIT**

IMAGE FORMAT CONVERSION UNIT ~10

101 ENGINE PART

102 PRINTER CONTROLLER PART

EP 1 501 273 A1

# FIG.3

SCANNER CORRECTION

2

21

22

| SCANNER $\gamma$ PROCESS PART | ZOOMING PROCESS PART |

# FIG.4

PRINTER CORRECTION

7

71

72

| PRINTER $\gamma$ PROCESS PART | HALFTONE PROCESS PART |

EP 1 501 273 A1

# FIG.5

GENERAL-PURPOSE BUS

100

13 FAX CONTROLLER

MONOCHROME BINARY VARIABLE-LENGTH REVERSIBLE COMPRESSED DATA DECOMPRESSION PART

15

14 NIC

19

①

4 PRINTER CONTROLLER

②

5 HDD

1 READING UNIT

RGB

2 SCANNER CORRECTION PART

CMYK

3 COLOR MULTI-LEVEL DATA FIXED-LENGTH COMPRESSION PART

COLOR VARIABLE-LENGTH REVERSIBLE COMPRESSED DATA DECOMPRESSION PART

MONOCHROME BINARY VARIABLE-LENGTH REVERSIBLE COMPRESSED DATA DECOMPRESSION PART

12 ENGINE CONTROLLER

CPU BUS

③

7 PRINTER CORRECTION PART

CMYK

6 COLOR MULTI-LEVEL DATA FIXED-LENGTH COMPRESSION PART

11 MEMORY

IMAGE DATA FLOW AT THE TIME OF COPYING

9 IMAGING UNIT

10 IMAGE FORMAT CONVERSION UNIT

101 ENGINE PART

102 PRINTER CONTROLLER PART

EP 1 501 273 A1

# FIG.6A

📠 ××××× 

**DOCUMENT BOX**

| DOCUMENT NAME | NUMBER OF PAGES | STORING MEANS | USER NAME |
|---|---|---|---|
| DATA000 | 1 | COPY | MAKI |
| DATA001 | 3 | SCANNER | CATHY |
| DATA002 | 2 | PRINT | MAKI |
| DATA003 | 1 | FAX | KATE |

📠 ○○○○○

CAPTURE CONDITION

# FIG.6B

**CAPTURE CONDITION**

IMAGE KIND MODE

| CHARACTER | CHARACTER AND PHOTOGRAPH | PHOTOGRAPH | OCR |

RESOLUTION

| 600dpi | 400dpi | 300dpi | 200dpi |

HALFTONE PROCESS

| BINARY | MULTI-LEVEL |

OUTPUT FORMAT

| JPEG | TIFF | JPEG2000 |

CAPTURE

CANCEL

# FIG.7

```
  10a          10b           10c        10d          10e           10f
┌──────────┐ ┌──────────┐ ┌─────────┐ ┌────────┐ ┌──────────┐ ┌────────────┐
│          │ │          │ │         │ │        │ │          │ │            │
│DECOMPRES-│→│RESOLUTION│→│FILTERING│→│   γ    │→│HALFTONE  │→│COMPRESSION │
│SION      │ │CONVERSION│ │PART     │ │PROCESS │ │PROCESS   │ │PART        │
│PART      │ │PART      │ │         │ │PART    │ │PART      │ │            │
└──────────┘ └──────────┘ └─────────┘ └────────┘ └──────────┘ └────────────┘
```

EP 1 501 273 A1

# FIG.8A

INPUT
MULTI-
LEVEL
DATA →

104
┌─────────────────┐
│ MAIN SCAN       │
│ DIRECTION       │
│ RESOLUTION      │
│ CONVERSION      │
│ BLOCK           │
└─────────────────┘

105
┌─────────────────┐
│ SUB-SCAN        │
│ DIRECTION       │
│ RESOLUTION      │
│ CONVERSION      │
│ BLOCK           │
└─────────────────┘

10b

→ OUTPUT
MULTI-
LEVEL
DATA

# FIG.8B

INPUT
MULTI-
LEVEL
DATA →

106

┌────┐  ┌────┐       ┌────┐  ┌────┐
│ FF │→ │ FF │ ──── │ FF │→ │ FF │
└────┘  └────┘       └────┘  └────┘

104 ~
107 ~

┌─────────────────────────────┐
│ INTERPOLATION PIXEL         │
│ CALCULATION PART            │
└─────────────────────────────┘

→ TO SUB-SCAN
DIRECTION
RESOLUTION
CONVERSION
BLOCK

MAIN SCAN DIRECTION RESOLUTION
CONVERSION BLOCK

# FIG.8C

SUB-SCAN DIRECTION RESOLUTION
CONVERSION BLOCK

MULTI-LEVEL
DATA AFTER
MAIN SCAN
DIRECTION
RESOLUTION
CONVERSION →

SUB-SCAN LINE
STORING MEMORY

┌──────────────┐
│ 1 LINE       │
│ MEMORY       │
└──────────────┘

┌──────────────┐
│ 1 LINE       │
│ MEMORY       │
└──────────────┘

┌──────────────┐
│ 1 LINE       │
│ MEMORY       │
└──────────────┘

┌──────────────┐
│ 1 LINE       │
│ MEMORY       │
└──────────────┘

109

┌──────────────┐
│ INTERPOLATION│
│ PIXEL        │
│ CALCULATION  │
│ PART         │
└──────────────┘

→ OUTPUT
MULTI-
LEVEL
DATA

105 ~
108 ~

FIG.9A

ORIGINAL IMAGE DATA
FILTERED IMAGE DATA

DYNAMIC RANGE OF IMAGE DATA

FIG.9B

ORIGINAL IMAGE DATA
FILTERED IMAGE DATA

DYNAMIC RANGE OF IMAGE DATA

FIG.9C

X DIRECTION

Y DIRECTION

| $X_{n-2,m-2}$ | $X_{n-2,m-1}$ | $X_{n-2,m}$ | $X_{n-2,m+1}$ | $X_{n-2,m+2}$ |
|---|---|---|---|---|
| $X_{n-1,m-2}$ | $X_{n-1,m-1}$ | $X_{n-1,m}$ | $X_{n-1,m+1}$ | $X_{n-1,m+2}$ |
| $X_{n,m-2}$ | $X_{n,m-1}$ | $X_{n,m}$ | $X_{n,m+1}$ | $X_{n,m+2}$ |
| $X_{n+1,m-2}$ | $X_{n+1,m-1}$ | $X_{n+1,m}$ | $X_{n+1,m+1}$ | $X_{n+1,m+2}$ |
| $X_{n+2,m-2}$ | $X_{n+2,m-1}$ | $X_{n+2,m}$ | $X_{n+2,m+1}$ | $X_{n+2,m+2}$ |

$X_{n,m}$ TARGET PIXEL

# FIG.10A

DYNAMIC RANGE AFTER
γ CONVERSION PROCESS

DYNAMIC RANGE OF ORIGINAL IMAGE DATA

# FIG.10B

(b)

DYNAMIC RANGE AFTER
γ CONVERSION PROCESS

(a)

(c)

DYNAMIC RANGE OF ORIGINAL IMAGE DATA

# FIG.11A

82

# FIG.11B

81

DITHER THRESHOLD VALUE MATRIX

# FIG.12

91

92

93

■ TARGET PIXEL

▨ PIXEL WHOSE ERROR IS DETERMINED

# FIG.13

SCANNER CORRECTION

| SCANNER $\gamma$ PROCESS PART (21) | ZOOMING PROCESS PART (22) | PRINTER $\gamma$ PROCESS PART (23) | HALFTONE PROCESS PART (24) |

# FIG.14

PRINTER
CORRECTION

| | |
|---|---|
| PRINTER $\gamma$ PROCESS PART | HALFTONE PROCESS PART |

71    72    7

# FIG.15

10

| 10a | 10g | 10b | 10c | 10d | 10e | 10f |
|---|---|---|---|---|---|---|
| DECOMPRESSION PART | MULTI-LEVEL CONVERSION PART | RESOLUTION CONVERSION PART | FILTERING PART | $\gamma$ PROCESS PART | HALFTONE PROCESS PART | COMPRESSION PART |

EP 1 501 273 A1

# FIG.16A

EP 1 501 273 A1

COPY

DOCUMENT BOX    k

FAX

PRINTER

SCANNER

| PLEASE SPECIFY DELIVERING DESTINATION | | maki@xxxxx.co.jp | |

f    e    P

| DOCUMENT NAME | NUMBER OF PAGES | STORING MEANS | USER NAME |
|---|---|---|---|
| DATA000 | 1 | COPY | MAKI |
| DATA001 | 3 | SCANNER | CATHY |
| DATA002 | 2 | PRINT | MAKI |
| DATA003 | 1 | FAX | KATE |

DELIVERING CONDITION

h

| 1 | 2 | 3 |
| 4 | 5 | 6 |
| 7 | 8 | 9 |
| . | 0 | # |

C

◇

## FIG.16B

COPY
DOCUMENT BOX
FAX
PRINTER
SCANNER

DELIVERING CONDITION

IMAGE KIND MODE

CHARACTER | CHARACTER AND PHOTOGRAPH | PHOTOGRAPH | OCR

RESOLUTION

600dpi | 400dpi | 300dpi | 200dpi

HALFTONE PROCESS

BINARY | MULTI-LEVEL

OUTPUT FORMAT

JPEG | TIFF | JPEG2000

DELIVER

CANCEL

P

i

j

1 2 3
4 5 6
7 8 9
. 0 #

C

**European Patent Office**

**EUROPEAN SEARCH REPORT**

Application Number

EP 04 25 4236

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/141380 A1 (KOGUCHI MASATSUGU) 3 October 2002 (2002-10-03) * abstract * * paragraphs [0011] - [0019]; figure 2 * | 1-20 | H04N1/00 |
| X | US 6 069 706 A (SARUWATARI MASARU ET AL) 30 May 2000 (2000-05-30) * abstract * * column 4, line 10 - column 6, line 46 * * column 9, line 34 - line 57 * | 1-20 | |

TECHNICAL FIELDS SEARCHED (Int.Cl.7)

H04N

The present search report has been drawn up for all claims

| Place of search | Date of completion of the search | Examiner |
|---|---|---|
| The Hague | 12 November 2004 | Stoffers, C |

**EP 1 501 273 A1**

## ANNEX TO THE EUROPEAN SEARCH REPORT
## ON EUROPEAN PATENT APPLICATION NO.

EP 04 25 4236

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2004

| Patent document cited in search report | | Publication date | Patent family member(s) | | Publication date |
|---|---|---|---|---|---|
| US 2002141380 | A1 | 03-10-2002 | JP | 3470704 B2 | 25-11-2003 |
| | | | JP | 2002288095 A | 04-10-2002 |
| US 6069706 | A | 30-05-2000 | JP | 3402864 B2 | 06-05-2003 |
| | | | JP | 9051397 A | 18-02-1997 |
| | | | JP | 9205513 A | 05-08-1997 |
| | | | CN | 1143229 A ,B | 19-02-1997 |
| | | | DE | 69624055 D1 | 07-11-2002 |
| | | | DE | 69624055 T2 | 14-08-2003 |
| | | | EP | 1193592 A2 | 03-04-2002 |
| | | | EP | 0757311 A1 | 05-02-1997 |
| | | | JP | 9102840 A | 15-04-1997 |
| | | | KR | 191044 B1 | 15-06-1999 |
| | | | US | 2003123112 A1 | 03-07-2003 |
| | | | US | 6433883 B1 | 13-08-2002 |
| | | | US | 2003007170 A1 | 09-01-2003 |
| | | | US | 5999708 A | 07-12-1999 |

EPO FORM P0459

For more details about this annex : see Official Journal of the European Patent Office, No. 12/82